# EUROPÄISCHE PATENTSCHRIFT

(11) **EP 0 791 613 B1**
(45) Veröffentlichungstag und Bekanntmachung des Hinweises auf die Patenterteilung: **14.04.1999**
(21) Anmeldenummer: 97102272.8
(22) Anmeldetag: 13.02.1997
(51) Int. Cl.: C08G 18/08, C08G 18/10, C08K 9/04, C08K 3/22, C08K 5/523, C01F 7/44

(54) **Flammhemmende Polyurethan-Systeme**
Flame-retardant polyurethane systems
Systèmes de polyuréthane ignifuges

(30) Priorität: 14.02.1996 CH 385/96
(43) Veröffentlichungstag der Anmeldung: 27.08.1997
(73) Patentinhaber: Sika AG, vorm. Kaspar Winkler & Co., CH-8048 Zürich (CH)
(72) Erfinder: Adeleu, François, 76220 Gournay en Bray (FR); Chaignon, Joel, 27630 Ecos (FR); Leleu, Jean Marc, 76220 Gournay en Bray (FR); Merz, Peter, 8832 Wollerau (CH); Onuoha, Ukiwo Obasi, 8049 Zürich (CH)
(74) Vertreter: Blum, Rudolf Emil Ernst

(56) Entgegenhaltungen:
- EP-A- 0 200 801
- WO-A-94/06886
- FR-A- 1 356 972
- FR-A- 1 496 648
- FR-A- 1 505 924

## Beschreibung

### Technisches Gebiet

Die vorliegende Erfindung betrifft Einkomponenten-Polyurethan(PU)-Systeme, insbesonders flammhemmende Systeme, welche vorzugsweise auch halogenfrei sind und die als Klebstoffe, Dichtungs- oder Beschichtungsmaterialien verwendet werden können.

### Stand der Technik

Die Verwendung von Aluminiumtrihydroxyhydrat (ATH) alleine oder in Kombination mit einer Phosphor- oder Halogen enthaltenden Verbindung ist in Zweikomponenten-Polyurethan-Systemen bekannt. Ein solches System ist beispielsweise beschrieben im US-Patent 4,876,291, welches ein Verfahren für die Bildung einer flammhemmenden Zusammensetzung beschreibt, welche der Polyolkomponente kurz vor dem Mischen mit der Isocyanatverbindung zugegeben wird, um verbesserte physikalische Schaumeigenschaften zu erzielen. Diese flammhemmende Zusammensetzung enthält einen wasserhaltigen Füllstoff wie ATH, welcher mit 0,25 bis 5% polyfunktionellem Isocyanat, bezogen auf die Menge an ATH, behandelt wurde, was zu einem Feuchtigkeitsgehalt von etwa 0,2 % führte.

Wasserhaltige Mineralien, wie Aluminiumtrihydroxyhydrat (ATH) verleihen sowohl Flamm- als auch Rauchhemmung durch Abgabe nichttoxischer Gase, wie Wasser, um die Verbrennungsprodukte zu verdünnen und die Verkohlung zu fördern.

Es wurde jedoch festgestellt, dass ein derart vorbehandeltes ATH, wie es in US 4,876,291 beschrieben ist, für Einkomponenten-Klebstofformulierungen, die wegen mangelnder Lagerstabilität und damit verbundener schneller Erhöhung der Viskosität, in einem versiegelten Behälter gelagert werden müssen, nicht geeignet ist. Ein solcher Viskositätsanstieg bedeutet einen wesentlichen Verlust der für die Handhabung wesentlichen Eigenschaften in einer relativ kurzen Zeitspanne.

Einkomponenten PU-Systeme, die vorgetrocknete Zusätze enthalten, sind aus dem Stand der Technik bekannt. So offenbart beispielsweise WO 94/06886 einen glasartigen Füllstoff, der mittels eines Isocyanats, das mindestens eine Funktionalität von 2 aufweist, vorgetrocknet wird. FR-A-1,505,924 und FR-A-1,356,972 beschreiben beide PU-Systeme enthaltend vorgetrocknete Pigmente. Die Vortrocknung erfolgt durch Verwendung von mit Wasser reagierenden Verbindungen.

Die Verwendung von Aluminiumoxid, das durch unvollständige Entwässerung von Aluminiumoxidtrihydrat (Aluminiumhydroxid) auf einen Wassergehalt von 0.5 - 0.05 Mol pro mol Aluminiumoxid hergestellt worden ist, als Trocknungsmittel für Polyurethanmassen wird in FR-1,496,648 beschrieben.

Eine gegebenenfalls hoch pigmentierte Masse (5-25 % Pigment) wird in EP 0 200 801 beschrieben. Neben dem Pigment enthält die Masse u.a. 1 bis 3 Gew.-% eines feuchtigkeitsbindenden Mittels.

Da Zweikomponenten-Systeme nicht so einfach anzuwenden sind wie Einkomponenten-Systeme, war es ein Gegenstand der vorliegenden Erfindung, ein flammhemmendes Einkomponenten-Polyurethan(PU)-System bereitszustellen, welches vorzugsweise zudem halogenfrei ist. Es war ein weiterer Gegenstand der vorliegenden Erfindung ein spezielles Herstellungsverfahren bereitzustellen, um lagerstabile, flammhemmende Klebstoffe zu erzielen.

Ein anderer Gegenstand der Erfindung war es, spezielle Füllstoffe für die Verleihung flammhemmender Eigenschaften bereitzustellen, die für die Verwendung in Einkomponenten(PU)-Systemen geeignet sind.

### Zusammenfassung der Erfindung

Es ist ein allgemeiner Gegenstand der vorliegenden Erfindung, isocyanat- und/oder silanterminierte Polyurethansysteme bereitzustellen, die lagerstabil, feuchtigkeitshärtend und flammhemmend sind.

Es wurde nun überraschenderweise gefunden, dass es möglich ist, flammhemmende und lagerstabile feuchtigkeitsreaktive PU-Systeme zu formulieren, die eine wesentliche Menge eines wasserhaltigen mineralischen Füllstoffmaterials, wie Aluminiumtrihydroxyhydrat (ATH), enthalten, und dies sogar in grossen Mengen, beispielsweise mehr als 35 Gew.-%, falls die wasserhaltigen Mineralien mittels eines Verfahrens behandelt werden, welches auch Teil der vorliegenden Erfindung ist.

Die gewünschte Lagerstabilität konnte durch ein spezifisches Herstellungsverfahren für das wasserhaltige Mineral erzielt werden, bei dem die Oberflächenaktivität des Minerals reduziert und neutralisiert wird, wodurch die unerwünschte Viskositätserhöhung während der Lagerung, die eine Anwendung unmöglich macht, verhindert wird.

Die Oberflächenaktivität wasserhaltiger Mineralien hängt von den Gruppen ab, die in der Lage sind mit NCO-Gruppen des Bindemittels zu reagieren.

Es ist ein weiterer Gegenstand der vorliegenden Erfindung ein ökologisches System bereitzustellen, das unter Feuchtigkeitseinwirkung zu einem flamm- und rauchhemmenden Elastomer aushärtet, insbesonders ein System für die Verwendung als Klebstoff, Dichtungs- oder Beschichtungsmaterial.

Dies wurde durch die Verwendung eines erfindungsgemäss behandelten wasserhaltigen Minerals möglich, vorzugsweise in Verbindung mit einer halogenfreien, Phosphor enthaltenden Substanz, vorzugsweise einem Phosphor enthaltenden Weichmacher. Eine solche Phosphor enthaltende Verbindung verbessert die flammhemmende Wirkung des wasserhaltigen Minerals, vorzugsweise ATH's, in synergistischer Weise. Das Phosphor enthaltende Material ist in der Formulierung vorzugsweise in einem spezifischen Verhältnis bezogen auf das Bindemittel vorhanden. Falls die Phosphor enthaltende Verbindung ein Phosphor enthaltender Weichmacher wie beispielsweise Diphenylcresylphosphat (DPK) ist, dann kann das Verhältnis von Phosphor enthaltendem Weichmacher zu Bindemittel im Bereich von 0,25 bis 5, vorzugsweise im Bereich von 0,7 bis 1,5 und speziell bevorzugt um etwa 1 sein.

### Ausführliche Beschreibung der Erfindung

Das erfindungsgemässe flammhemmende und lagerstabile feuchtigkeitsreaktive PU-System enthält eine wesentliche Menge wasserhaltigen mineralischen Füllstoffmaterials wie Aluminiumtrihydroxyhydrat (ATH), welches gemäss dem unten beschriebenen Verfahren hergestellt wird. Das derart behandelte ATH kann sogar in grossen Mengen vorhanden sein, z.B. mehr als 35 Gew.-%, ohne die Lagerstabilität des Systems negativ zu beeinflussen.

Um die Flamm- und Rauchhemmung zu verbessern ist es bevorzugt, ein erfindungsgemäss behandeltes wasserhaltiges Mineral in Verbindung mit einem Phosphor enthaltenden Weichmacher zu verwenden. Das Phosphor enthaltende Material ist vorzugsweise halogenfrei. Es verbessert die flammhemmende Wirkung des wasserhaltigen Minerals in synergistischer Weise. Falls die Phosphor enthaltende Verbindung ein Phosphor enthaltender Weichmacher wie beispielsweise Diphenylcresylphosphat (DPK) ist, dann kann das Gewichts-Verhältnis von Phosphor enthaltendem Weichmacher zu Bindemittel im Bereich von 0,25 bis 5, vorzugsweise in einem Bereich von 0,7 bis 1,5 und speziell bevorzugt um etwa 1 liegen.

Das flammhemmende PU-System enthält vorzugsweise zusätzlich einen latenten Härter, welcher in Mengen von bis zu 10 Gew.-% vorzugsweise in einer Menge von 1 bis 3 Gew.-%, basierend auf dem Gesamtgewicht des Systems, vorhanden sein kann.

Zusätzlich kann das erfindungsgemässe System andere Weichmacher, andere Füllstoffe und andere Additive enthalten, üblicherweise mindestens ein Additiv wie Haftungsverbesserer, Katalysatoren, etc.

Das erfindungsgemässe, feuchtigkeitsreaktive, halogenfreie, flammhemmende Klebstoff-, Beschichtungs- oder Dichtungs-Material ist dadurch gekennzeichnet, dass es vorzugsweise die folgende Mischung enthält oder daraus besteht:
A) 10 bis 60 Gew.-% mindestens eines wasserhaltigen Minerals mit einem Wassergehalt von weniger als 0,1 Gew.-% in Gegenwart einer wasserbindenden Verbindung und/oder deren Reaktionsprodukt mit Wasser,
B) 10 bis 50 Gew.-% mindestens eines Phosphor enthaltenden Weichmachers,
C) 10 bis 40 Gew.-% mindestens eines Bindemittels auf Isocyanatbasis,
D) gegebenenfalls mindestens einem latenten Härter in solchen Mengen, dass die reaktiven Gruppen des Härters in einer Menge von 10-100 % der Isocyanatgruppen des Prepolymers vorhanden sind, und
E) gegebenenfalls andere Bestandteile, die dem Fachmann auf diesem Gebiet bekannt sind, die aber nicht in eine der oben genannten Gruppen A bis D fallen,
   wobei der Isocyanatgehalt (NCO) bezogen auf das Gesamtgewicht des Klebstoff-, Beschichtungs- oder Dichtungs-Materials üblicherweise im Bereich von 0,01 bis 10 Gew.-%, vorzugsweise unter 1 Gew.-% liegt.

Bevorzugte Beispiele solcher unter E genannter Verbindungen schliessen die folgenden ein:
Weichmacher ausgewählt aus der Gruppe bestehend aus Phthalaten, wie Dibutyl-, Dioctyl-, Dicyclohexyl-, Diisooctyl-, Diisodecyl-, Dibenzyl- oder Butylbenzylphthalat; Epoxy-enthaltende Weichmacher, Toluolsulfonamide, Paraffine, Adipinsäureester, Rizinuosöl, etc.;
Füllstoffe ausgewählt aus der Gruppe bestehend aus Kieselsäurederivaten, Gips, Talk, Aktivkohle, Metallpulver, Kalk, Kaolinit, Russ, etc.;
ein Hilfsmittel oder Additiv ausgewählt aus
   a) latenten Härtern wie Enaminen, Oxazolidinen, Aldiminen und Ketiminen, gegebenenfalls in Anwesenheit eines Säurestabilisators oder eines latenten Säurestabilisators, z.B. eines Anhydrids einer Dicarbonsäure,
   b) Haftungsverbesserer, insbesonders Silan enthaltende Verbindungen, welche zusätzlich mindestens eine reaktive Gruppe wie Epoxy-, Isocyanat-, Amingruppen oder Doppelbindungen enthalten,
   c) Farbstoffe oder Pigmente,
   d) Polyurethankatalysatoren, wie Blei und/oder Zinnverbindungen, gegebenenfalls in Verbindung mit anderen Polyurethankatalysatoren, insbesonders mit Katalysatoren, die ein tertiäres Amin enthalten,
   e) UV-Absorptionsmittel oder Stabilisatoren, wie phenolische Antioxidantien,
   f) Oberflächenaktive Additive, wie Emulgatoren,
   g) andere Flammhemmer, wie Phosphate mit Arylgruppen oder mit bis zu 8 C-Atomen in der Alkylgruppe, z.B. Diphenylcresylphosphat, Tricresylphosphat, Triethylphosphat, Trioctylphosphat, etc.; Dimethylmethylphosphonat;
   h) fungistatisch aktive und/oder bakteriostatisch aktive Substanzen.

Bevorzugte Bindemittel für die vorliegende Erfindung sind isocyanat- und/oder silanterminierte Polyurethanprepolymere, insbesonders jene, die aus den folgenden Stoffen gebildet sind:
a) aromatische Diisocyanate wie beispielsweise 4,4'-Diphenyl-methan-diisocyanat, 2,4-Toluol-diisocyanat, Naphthylen-1,5-diisocyanat, 1,3- und 1,4-Phenylendiisocyanat, und/oder
b) aliphatische oder cycloaliphatische Diisocyanate, wie Hexamethylendiisocyanat, 1,12-Dodecandiisocyanat, Cyclobutan-1,3-Diisocyanat, Cyclohexan-1,3-diisocyanat, Cyclohexan-1,4-diisocyanat, 1-Isocyanato-3,3,5-trimethyl-3-isocyanatomethylcyclohexan (Isophorondiisocyanat), 2,4- und 2,6-Hexahydrotoluol-diisocyanat, Hexahydro-1,3-phenyldiisocyanat und Hexahydro-1,4-phenyldiisocyanat, Perhydro-2,4'-diphenylmethandiisocyanat und Perhydro-4,4'-diphenylmethan-diisocyanat, und
c) Polyole mit einem Molekulargewicht im Bereich von 400 bis 10'000, vorzugsweise im Bereich von etwa 1000 bis 5000, wie die Polyole von z.B.
   - linearen oder verzweigten Polybutadienen,
   - Polycarbonate,
   - Polycaprolactone,
   - Polycaprolactame,
   - Polyether, z.B. Polyethylenoxide, Polypropylenoxide, Polybutylenoxide, Polystyroloxide, Polyepichlorhydrine, Polytetrahydrofurane,
   - Polyester, z.B. irgendwelche Kondensationsprodukte von
      - - mehrwertigen Alkoholen (z.B. Ethylenglycol, Propylenglycol-1,2 und -1,3, Butylenglycol-1,4 und - 2,3, Hexandiol-1,6, Octandiol-1,8, Glycerin, Trimethylolpropan, Pentaerythrit, Chinit, Mannit und Sorbit, Methylglycosid, Diethylenglycol, Polyethylenglycole, Dipropylenglycol, Polypropylenglycole) mit
      - - mehrwertigen Carbonsäuren und/oder Carbonsäureanhydriden und/oder Carbonsäureestern, (z.B. Bernsteinsäure, Adipinsäure, Korksäure, Azelainsäure, Sebacinsäure, Phthalsäure, Isophthalsäure, Trimellitsäure-Phthalsäureanhydrid, Tetrahydrophthalsäureanhydrid, Tetrachlorphthalsäureanhydrid, Glutarsäureanhydrid, Maleinsäureanhydrid, Fumarsäure, Terephthalsäure-dimethylester und Terephthalsäure-bis-glycolester, jeder mit terminalen, primären und/oder sekundären OH-Gruppen, wie z.B. Ethylenglycole, bis-Hexandiol-1,6, Propylenglycol, bis-Hexapropylenglycol, Diethylenglycol, bis-Hexaethylenglycole).

Eine stark bevorzugte Zusammensetzung des erfindungsgemässen Systems umfasst eine Mischung von
A) 35 bis 45 Gew.-% mindestens eines wasserhaltigen Minerals mit einem Wassergehalt von weniger als 0,1 Gew.-%, in Gegenwart einer wasserbindenden Verbindung und/oder deren Reaktionsprodukt mit Wasser,
B) 20 bis 30 Gew.-% mindestens eines Phosphor enthaltenden Weichmachers,
C) 20 bis 30 Gew.-% mindestens eines Bindemittels auf Basis von Isocyanat,
D) gegebenenfalls mindestens einem latenten Härter in solchen Mengen, dass die reaktiven Gruppen des Härters in einer Menge von 40 bis 90 Gew.-%, speziell bevorzugt von 50 bis 80 Gew.-% der Isocyanat-Gruppen des Prepolymers vorhanden sind.

Ein sehr stark bevorzugtes wasserhaltiges Mineral ist Aluminiumtrihydroxyhydrat (ATH). Die bevorzugten Phosphor enthaltenden Weichmacher sind jene, die halogenfrei sind wie z.B. Diphenylcresylphosphat (DPK), und das bevorzugte Bindemittel auf Isocyanatbasis hat einen Isocyanatgehalt (NCO), bezogen auf das Gesamtgewicht der bevorzugten Zusammensetzung im Bereich von 0,01 bis 10 Gew.-%, vorzugsweise unter 1 Gew.-%.

Die erfindungsgemässen PU-Systeme werden mittels eines Verfahrens hergestellt, das selbst Teil der vorliegenden Erfindung ist. Das erfindungsgemässe Verfahren ist dadurch gekennzeichnet, dass die erfindungsgemässen Systeme unter wasserfreien Bedingungen hergestellt werden und unter Verwendung entwässerter wasserhaltiger Mineralien, insbesonders ATH's, die mit wasserbindenden, insbesonders feuchtigkeitsreaktiven Verbindungen behandelt worden sind, so dass im PU-System gegebenenfalls auch deren Reaktionsprodukte mit Wasser vorhanden sind.

Eine wirkungsvolle Trocknung des wasserhaltigen Minerals wird unter Vakuum und bei einer Temperatur durchgeführt, die geeignet ist das wasserhaltige Mineral auf einen Wassergehalt von weniger als 0,1 % partiell zu entwässern, aber ohne die Zersetzung des wasserhaltigen Minerals zu bewirken. Für ATH ist die genannte Temperatur oberhalb 120°C, aber ausreichend unterhalb 200°C.

Ein Wassergehalt des wasserhaltigen Minerals von mehr als 0,1 Gew.-% führt zu unzureichender Lagerstabilität und fettiger Konsistenz des PU-Systems. Zudem wird ein Ueberschuss an feuchtigkeitsreaktiven Verbindungen benötigt, falls während der Vortrocknung des wasserhaltigen Minerals der Wassergehalt nicht auf unter etwa 0,1 Gew.-% reduziert wird. Dies kann zu einem Polyurethanelastomer mit schlechteren Polymer-Endeigenschaften führen.

Auf dieses vorgetrocknete, wasserhaltige Mineral kann jede wasserbindende, insbesonders feuchtigkeitsreaktive Verbindung angewendet werden, welche in den Mengen, die benötigt werden um gute Lagerstabilität des ATH enthaltenden PU-Systems zu bewirken, das PU-System nicht negativ beeinflusst. Solche Verbindungen sind beispielsweise Monomeren mit Isocyanatgruppen oder polyfunktionelle Isocyanate, vorzugsweise Monoisocyanate, Anhydride, Silane, Titanate. Eine bevorzugte feuchtigkeitsreaktive Verbindung ist Paratoluolsulfonylisocyanat (PTSI).

Obschon es möglich ist, das wasserhaltige Mineral auf weniger als 0,1 Gew.-% zu trocknen, beispielsweise durch Trocknen in einer Trockenkammer mit einem chemischen Absorptionsmittel, wie etwa Phosphorpentoxid, ist es stark bevorzugt, eine spezifische Menge feuchtigkeitsreaktiver Verbindung neben dem erfindungsgemäss auf einen Gehalt von maximal ca. 0.1 % Wasser vorgetrockneten wasserhaltigen Mineral in das PU-System einzubringen, da eine solche Verbindung zusätzlich zu einem geringen Wassergehalt der ganzen Formulierung beiträgt. Ueberraschenderweise hat es sich gezeigt, dass es nicht notwendig ist, feuchtigkeitsreaktive Gruppen in einer Menge ins System einzubringen, die der im wasserhaltigen, vorgetrockneten Mineral enthaltenen Restwassermenge entsprechen. Für die meisten Anwendungen sind 50-90 Mol %, insbesonders 65-75 Mol %, ausreichend.

Ein bevorzugtes Einkomponenten-PU-System mit guter Lagerstabilität und homogenen Eigenschaften (keine Agglomerationen und Klumpen) wird erhalten, wenn entwässertes ATH (erfindungsgemäss vorgetrocknet) portionenweise unter wasserfreien Bedingungen zu einem Premix, bestehend aus Bindemittel und flammhemmendem Weichmacher zugegeben wird, wobei das Bindemittel einen Isocyanatgehalt von vorzugsweise weniger als 1 Gew.-% hat, und anschliessende Behandlung mit einer feuchtigkeitsreaktiven Komponente. Schliesslich werden die Additive und der Katalysator, z.B. ein Organozinnkatalysator, zugegeben.

Falls für ein blasenfrei feuchtigkeitshärtendes PU-Systems ein latenter Härter verwendet wird, wird die beste Lagerstabilität erzielt, wenn entwässertes ATH (erfindungsgemäss vorgetrocknet) im flammhemmenden Weichmacher dispergiert und dann mit der feuchtigkeitsreaktiven Verbindung behandelt wird, beispielsweise mit polyfunktionellen isocyanatenthaltenden Verbindungen. Die Behandlung mit einer feuchtigkeitsreaktiven Komponente erfolgt bei erhöhter Temperatur und vor der Zugabe des Bindemittels, des latenten Härters, der Additive und des Katalysators.

Der erfindungsgemässe flammhemmende Klebstoff kann für das Verbinden und/oder Versiegeln eines oder mehrerer Materialien gleichen oder unterschiedlichen Ursprungs zu einer Einheit verwendet werden. Er ist sehr gut geeignet für die Verwendung bei vielen Anwendungen, die im Baubereich sowie in der Industrie auftauchen, z.B. im Bereich der Fahrzeugherstellung, Marine, etc. Der erfindungsgemässe flammhemmende Klebstoff kann beispielsweise verwendet werden, um die folgenden Materialien zu verbinden oder abzudichten:
- jegliche Baumaterialien, insbesonders Steine, Beton, Mörtel, Strassenpflaster,
- jegliches Metall, welches lackiert, metallisiert oder anderweitig beschichtet und/oder vorbehandelt sein kann, sowie z.B. Fahrzeugkarosserien,
- jegliche Metallegierungen, welche lackiert, metallisiert oder anderweitig beschichtet und/oder vorbehandelt sein können, wie z.B. Fahrzeugkarosserien,
- jegliches Glas, insbesonders Glasplatten für die Verwendung in Fahrzeugen wie Autos, Platten aus Verbund-Glas, Frontscheiben aus Glas,
- jegliche Kunststoffe, wie z.B. PU-Elastomere, Polyester, Acrylnitril-butadien-styrol-copolymere (ABS), Polyamide, Polyvinylacetat, Polyvinylchlorid, etc., und
- jegliches Holz.

Die folgenden Beispiele sollen die Erfindung weiter veranschaulichen. Diese sind in keiner Weise als den Umfang der Erfindung in irgendeiner Form beschränkend anzusehen.

### Beispiele

| **Rohmaterialien, die in den Beispielen verwendet wurden**: | **Bezogen von:** |
|---|---|
| MDI (Methylen-4,4'-diphenyldiisocyanat): | Bayer, DE |
| TDI (Tolylendiisocyanat): | Bayer, DE |
| Desmodur Z 4370 (Trimerisiertes IPDI): | Bayer, DE |
| IPDI (Isophorondiisocyanat): | Bayer, DE |
| PTSI (para-Toluolsulfonylisocyanat): | Rahn AG, CH |
| Polyoxyalkylenether-Polyol: | Bayer/Dow, DE |
| Triethylendiamin: | Fluka, CH |
| DPK (Diphenylcresylphosphat/Disflamoll DPK): | BASF, DE |
| Salicylsäure: | Fluka, CH |
| DBTDL (Dibutylzinn-dilaurat-Katalysator): | Air Products, DE |
| Latenter Härter BJ: Dialdimin aus Polyoxypropylendiamin und benzaldehyd * | |

| | |
|---|---|
| * Herstellung gemäss EP 0 469 751 A1, Temp. 110°C, aber ohne Katalysator | |

Das in den Beispielen als Ausgangsmaterial verwendete ATH (Aluminiumtrihydroxyhydrat) hatte eine mittlere Teilchengrösse von 3,5 µm und einen Wassergehalt > 0,3 %.

### Zubereitung 1: TDI-Prepolymer

Das TDI-Prepolymer wurde durch zur Reaktion bringen eines Polyoxyropylenetherpolyols mit einem mittleren Molekulargewicht von 4000 und einer Hydroxylzahl von 40 mit Toluoldiisocyanat (TDI) hergestellt.

2000 g des genannten Polyols mit einem Wassergehalt von 0,03 Gew.-% wurde in einen Reaktionskolben mit 198 g TDI gegeben. Die Prepolymersynthesereaktion wurde mit 0,01 % Triethylendiamin katalysiert, und es wurde der Mischung gestattet während etwa 3 Stunden bei 80°C unter Rühren und unter Stickstoffspülung zu reagieren.

Die Reaktion war nach Erhalt eines konstanten Endisocyanatgehalts von 1,5 Gew.-% vollständig. Es wurde dem Prepolymer gestattet auf eine Temperatur von 60°C abzukühlen, und dieses wurde dann für die Verwendung in den unten beschriebenen Formulierungen in luftdichte Behälter abgefüllt.
Endgehalt des Prepolymers an Isocyanat: 1,5 %
Viskosität nach 24 Stunden bei 23°C: 15 Pa.s.

### Zubereitung 2: MDI-Prepolymer

Das gleiche Verfahren, das für die Herstellung des TDI-Prepolymers verwendet wurde, wurde mit der Ausnahme, dass anstelle des in Zubereitung 1 verwendeten TDI's 324,98 g Methylen-diphenyldiisocyanat (MDI) eingesetzt wurden, auch hier verwendet.

Die Mischung wurde ohne Katalyse während 3 Stunden bei 90°C zur Reaktion gebracht, was einen konstanten Endgehalt an Isocyanat von 2,0 % ergab. Es wurde der Temperatur gestattet, auf 60°C abzusinken, und das Prepolymer wurde in luftdichte Behälter gefüllt, um in den unten angegebenen Formulierungen verwendet zu werden.
Endgehalt des Prepolymers an Isocyanat: 2 %
Viskosität nach 24 Stunden bei 23°C: 20 Pa.s.

### Beispiel 1:

### Optimierung der flammhemmenden Wirkung eines halogenfreien Klebstoffs

Der Flammhemmungs-Test "UL94" wurde verwendet, um die flammhemmende Wirkung zu ermitteln, wenn ein Klebstoffkörper direkt einer Flamme ausgesetzt wird.

**Zubereitung**: ATH (ohne erfindungsgemässe Entwässerungsbehandlung) wurde einem Premix von Bindemittel und DPK beigegeben. Schliesslich wurden 0,05 Gew.-Teile (G.T.) Katalysator (DBTDL) mit der PU-Masse vermischt.

| **Bestandteile** | **Versuch 1** | **Versucht 2** |
|---|---|---|
| Bindemittel¹⁾ | 26 G.T. | 26 G.T. |
| Disflamoll DPK | 23 G.T. | 26 G.T. |
| ATH | 35 G.T. | 42 G.T. |
| Verhältnis DPK/Bindemittel | 0.83 | 1 |
| NFP 92501 M2 | schlecht | gut |

| | | |
|---|---|---|
| G.T. = Gewichtsteile | | |
| NFP 92501 = Bestrahlungs-Test | | |
| ¹⁾ Bindemittel = 10 Gew.-Teile TDI-Prepolymer und 16 Gew.-Teile MDI-Prepolymer (für die Herstellung des Isocyanatprepolymers vergleiche oben) | | |

**Schlussfolgerung**: Die Untersuchung zeigt, dass die beste flammhemmende Wirkung erzielt wird, wenn das Verhältnis des flammhemmenden Weichmachers, DPK, zum Bindemittel nahe bei 1 liegt und der ATH-Gehalt mehr als 40 % beträgt.

Ein erfindungsgemässer Klebstoff mit der Zusammensetzung gemäss Versuch 2 aber erfindungsgemäss behandeltem ATH (Wasserfänger PTSI, 0,6 %) zeigt verbesserte flammhemmende Wirkung in einem ökologisch optimierten Polyurethanmaterial. Die Testergebnisse sind wie folgt:
- Klassifizierung M2 gemäss dem Bestrahlungstest NFP 92501
- Klassifizierung V-0 gemäss dem Entzündungstest UL 94
- Klassifizierung F2 gemäss Rauchdichte-Flammentest NFX 10702 und NFX 70100.

### Beispiel 2

### Einfluss der Trocknung von ATH und Verwendung einer Isocyanatverbindung als Behandlungsmittel auf die Lagerstabilität von feuchtigkeitsreaktiven PU-Systemen ohne latenten Härter

**Zubereitung**: ATH wurde einem Premix (Bindemittel und Disflamoll DPK) zugegeben, der mit PTSI und/oder Desmodur Z 4370 vorbehandelt worden war. Schliesslich wurden 0,05 Gew.-Teile Katalysator (DBTDL) der PU-Masse beigemischt.

| **1. ATH (nicht getrocknet): Feuchtigkeitsgehalt > 0,3 Gew.-%** | | | | | |
|---|---|---|---|---|---|
| **Bestandteile** | **Mengen** | **Versuch 3** | **Versuch 4** | **Versuch 5** | **Versuch 6** |
| ATH (nicht getrocknet) | 40 | x | x | x | x |
| Bindemittel¹⁾ | 26 | x | x | x | x |
| Disflamoll DPK | 26 | x | x | x | x |
| PTSI | 0.6 | | x | x | x |
| Desmodur Z 4370 | 1 | | | x | x |

| **Viskosität (mPa.s)** | | | | | |
|---|---|---|---|---|---|
| nach Herstellung | | 127 | 119 | 121 | 96 |
| nach 7 Tagen/20°C | | gehärtet | gehärtet | gehärtet | gehärtet |
| nach 14 Tagen/20°C | | gehärtet | gehärtet | gehärtet | gehärtet |
| nach 28 Tagen/20°C | | gehärtet | gehärtet | gehärtet | gehärtet |

| | | | | | |
|---|---|---|---|---|---|
| ^{**1)**} Bindemittel, vergleiche Beispiel 1 | | | | | |

| **2) ATH (getrocknet): Feuchtigkeitsgehalt < 0.1 Gew.-%** | | | | |
|---|---|---|---|---|
| **Bestandteile** | **Mengen** | **Versuch 7** | **Versuch 8** | **Versuch 9** |
| ATH (getrocknet) | 40 | x | x | x |
| Bindemittel¹⁾ | 26 | x | x | x |
| Disflamoll DPK | 26 | x | x | x |
| PTSI | 0.6 | | x | |
| Desmodur Z4370 | 1 | | | x |

| **Viscosität (mPa.s)** | | | | |
|---|---|---|---|---|
| anfänglich | | 115 | 115 | 119 |
| nach 7 Tagen/20°C | | 223 | 132 | 160 |
| nach 14 Tagen/20°C | | 381 | 157 | 254 |
| nach 28 Tagen/20°C | | inhomogen, griessig | 250 | inhomogen, griessig |

| | | | | |
|---|---|---|---|---|
| ^{**1)**} Bindemittel, vergleiche Beispiel 1 | | | | |

**Schlussfolgerung**: In einem Isocyanatgruppen enthaltenden System ist eine Behandlung nicht-entwässerten ATH's mit einem Wasserfänger (Verbindung, die mit Wasser reagiert) gemäss US 4,876,291 nicht ausreichend und ergibt keine geeignete Lagerstabilität (vgl. z.B. Versuche 5 und 6).

ATH muss auf unter 0,1 % entwässert und zusätzlich mit einem Wasserfänger behandelt werden, vorzugsweise mit PTSI (vgl. Versuch 8) bei erhöhter Temperatur.

### Beispiel 3

### Einfluss der Trocknung von ATH und der Verwendung einer Isocyanatverbindung als ein Behandlungsmittel auf die Lagerstabilität von feuchtigkeitsreaktiven PU-Systemen mit latentem Härter

**Zubereitung**: Nach der Vorbehandlung des Premixes (ATH und Disflamoll DPK) mit Desmodur Z 4370 bei 70°C, wurden das Bindemittel, der latente Härter und die Additive zugegeben.

| **Bestandteile** | **Mengen** | **Versuch 10** | **Versuch 11** |
|---|---|---|---|
| ATH(nicht getrocknet) | 40 | x | |
| ATH(getrocknet) | 40 | | x |
| Bindemittel¹⁾ | 26 | x | x |
| Disflamoll DPK | 26 | x | x |
| Latenter Härter BJ | 1.8 | x | x |
| Salicylsäure * | 0 und 0.1 | x | x |
| Desmodur Z 4370 | 0.5 | 0.5 | 0.5 |

| **Extrusionsgeschwindigkeit (g/min)** | | **Versuch 10** | **Versuch 11** |
|---|---|---|---|
| nach 7 Tagen/20°C | | 92 | 92 |
| nach 28 Tagen/20°C | | 43 | 88 |
| nach 3 Monaten/20°C | | griessig,inhomogen/15 | 40 |

| | | | |
|---|---|---|---|
| * Salicylsäure zeigt bis zu einer Menge von 0,1 Gew.-Teilen keinen Einfluss | | | |
| ^{**1)**} Bindemittel, vergleiche Beispiel 1 | | | |

**Schlussfolgerung**: In einem Einkomponenten-PU-System mit einem latenten Härter muss ATH auf unter 0,1 % entwässert und zusätzlich mit einer feuchtigkeitsreaktiven Verbindung, z.B. Desmodur Z 4370, bei erhöhter Temperatur behandelt werden.

Eine grössere Menge von Desmodur Z 4370 (> 0,5 %) sollte nicht verwendet werden, da die mechanischen Eigenschaften des Polyurethans schlechter werden.

### Beispiel 4

### Einfluss der Korngrösse des ATH auf das mechanische Verhalten

Die mechanischen Eigenschaften wurden gemäss NF P 85 507 bestimmt. Als Substrat wurde mit SikaPrimer-215 vorbehandeltes Aluminium verwendet.

| mittlere Teilchengrösse ATH | Modul | Dehnung |
|---|---|---|
| 3.5 µm | 0.85 MPa | 220 % C * |
| 9.0 µm | 0.75 MPa | 110 % C * |

| | | |
|---|---|---|
| * kohäsiver Bruch | | |

**Schlussfolgerung**: Eine Teilchengrösse von etwa 3.5 µm erleichtert die Optimierung des Moduls und der Bruchdehnung.

## Patentansprüche

1. Einkomponenten-Polyurethan(PU)-System enthaltend ein wasserhaltiges Mineral mit einem Wassergehalt von Weniger als 0,1 Gew.-%, in Gegenwart mindestens einer wasserbindenden Verbindung enthaltend mind. eine wasserreaktive Gruppe und/oder deren Reaktionsprodukt mit Wasser, wobei die wasserbindende Verbindung und/oder deren Reaktionsprodukt maximal in einer Menge vorhanden ist, die, bezogen auf die wasserreaktiven Gruppen, den max. 0.1 Gew.-% Wasser im Mineral entspricht, und wobei die wasserbindende Verbindung ausgewählt ist aus der Gruppe umfassend:
Monomeren mit Isocyanatgruppen oder polyfunktionelle Isocyanate, Anhydride, Silane und Titanate.

2. Das PU-System gemäss Anspruch 1, dadurch gekennzeichnet, dass die wasserbindende Verbindung ein Monoisocyanat ist.

3. Das PU-System gemäss Anspruch 1 oder 2, dadurch gekennzeichnet, dass die wasserbindende Verbindung Paratoluolsulfonylisocyanat (PTSI) ist.

4. Das PU-System gemäss einem der Ansprüche 1 bis 3, dadurch gekennzeichnet, dass es zusätzlich eine Phosphor enthaltende Verbindung enthält.

5. Das PU-System gemäss irgend einem der Ansprüche 1 bis 4, dadurch gekennzeichnet, dass das wasserhaltige Mineral Aluminiumtrihydroxyhydrat (ATH) ist.

6. Das PU-System gemäss Anspruch 4 oder 5, dadurch gekennzeichnet, dass die Phosphor enthaltende Verbindung ein Phosphor enthaltender Weichmacher ist.

7. Das PU-System gemäss Anspruch 6, dadurch gekennzeichnet, dass der Phosphor enthaltende Weichmacher halogenfrei ist.

8. Das PU-System gemäss Anspruch 6 oder 7, dadurch gekennzeichnet, dass der Phosphor enthaltende Weichmacher Diphenylcresylphosphat ist.

9. Das PU-System gemäss irgend einem der Ansprüche 1 bis 8 umfassend
A) 10 bis 60 Gew.-% mindestens eines wasserhaltigen Minerals mit einem Wassergehalt von weniger als 0,1 Gew.-%, in Gegenwart mindestens einer wasserbindenden Verbindung und/oder deren Reaktionsprodukt mit Wasser,
B) 10 bis 50 Gew.-% mindestens eines Phosphor enthaltenden Weichmachers,
C) 10 bis 40 Gew.-% mindestens eines Bindemittels auf Isocyanatbasis.

10. Das PU-System gemäss irgend einem der Ansprüche 1 bis 9 umfassend
A) 35 bis 45 Gew.-% mindestens eines wasserhaltigen Minerals, mit einem Wassergehalt von weniger als 0,1 Gew.-% in Gegenwart mindestens einer wasserbindenden Verbindung und/oder deren Reaktionsprodukt mit Wasser,
B) 20 bis 30 Gew.-% mindestens eines Phosphor enthaltenden Weichmachers,
C) 20 bis 30 Gew.-% mindestens eines Bindemittels auf Isocyanatbasis.

11. Das PU-System gemäss irgend einem der Ansprüche 1 bis 10, dadurch gekennzeichnet, dass es zusätzlich bis zu 10 Gew.-% mindestens eines latenten Härters enthält, wobei die reaktiven Gruppen des Härters in einer Menge von 10 bis 100 % bezogen auf die Isocyanatgruppen des Prepolymers vorhanden sind.

12. Das PU-System gemäss Anspruch 11, dadurch gekennzeichnet, dass es den mindestens einen latenten Härter in Mengen von 1 bis 3 Gew.-% enthält.

13. Das PU-System gemäss Anspruch 11 oder 12, dadurch gekennzeichnet, dass die reaktiven Gruppen des Härters in einer Menge von 40 bis 90 % bezogen auf die Isocyanatgruppen des Prepolymers vorhanden sind.

14. Das PU-System gemäss irgend einem der Ansprüche 11 bis 13, dadurch gekennzeichnet, dass die reaktiven Gruppen des Härters in einer Menge von 50 bis 80 % bezogen auf die Isocyanatgruppen des Prepolymers vorhanden sind.

15. Das PU-System gemäss irgend einem der Ansprüche 1 bis 14, dadurch gekennzeichnet, dass das Bindemittel auf Isocyanatbasis einen Isocyanatgehalt bezogen auf das Gesamtgewicht des PU-Systems im Bereich von 0,01 bis 10 Gew.-% aufweist.

16. Das PU-System gemäss Anspruch 15, dadurch gekennzeichnet, dass das Bindemittel auf Isocyanatbasis einen Isocyanatgehalt bezogen auf das Gesamtgewicht des PU-Systems von unter 1 Gew.-% aufweist.

17. Das PU-System gemäss irgend einem der Ansprüche 1 bis 16, dadurch gekennzeichnet, dass das Verhältnis des Phosphor enthaltenden Weichmachers zum Bindemittel nahe bei 1 liegt.

18. Verfahren zur Herstellung eines Einkomponenten-Polyurethan(PU)-Systems enthaltend ein wasserhaltiges Mineral, dadurch gekennzeichnet, dass das wasserhaltige Mineral vor dessen Zugabe zum Bindemittel bei erhöhter Temperatur, gegebenenfalls unter Vakuum, auf einen Wassergehalt unter 0.1 Gew.-% vorgetrocknet und dann unter wasserfreien Bedingungen entweder zusammen mit einer wasserbindenden Verbindung enthaltend mindestens eine wasserreaktive Gruppe oder nach der wasserbindenden Verbindung einem Bindemittel resp. einer bindemittelhaltigen Mischung zugegeben wird, wobei die wasserbindende Verbindung wie in einem der Ansprüche 1 bis 3 definiert ist.

19. Verfahren gemäss Anspruch 18, dadurch gekennzeichnet, dass das wasserhaltige Mineral vor dessen Zugabe zum Bindemittel bei erhöhter Temperatur und unter Vakuum, auf einen Wassergehalt unter 0.1 Gew.-% vorgetrocknet wird.

## Claims

1. One component polyurethane (PU) system comprising a hydrated mineral having a water-content of less than 0.1% by weight in the presence of at least one water-absorbent compound comprising at least one water-reactive group and/or the reaction product thereof with water, whereby the water-absorbent compound and/or the reaction products thereof are present in at most an amount referred to the water-reactive group corresponding to the at most 0.1% by weight of water in the mineral, and whereby the water-absorbent compound is selected from the group comprising:
monomers with isocyanate groups or polyfunctional isocyanates, anhydrates, silanes and titanates.

2. The PU-system according to claim 1, characterized in that the water-absorbent compound is a monoisocyanate.

3. The PU-system according to claim 1 or 2, characterized in that the water-absorbent compound is para-toluenesulfonyl isocyanate (PTSI).

4. The PU-system according to anyone of claims 1 to 3, characterized in that it additionally comprises a phosphorus comprising compound.

5. The PU-system according to anyone of claims 1 to 4, characterized in that the hydrated mineral is aluminum trihydroxy hydrate (ATH).

6. The PU-system according to claim 4 or 5, characterized in that the phosphorus containing compound is a phosphorus containing plasticizer.

7. The PU-system according to claim 6, characterized in that the phosphorus containing plasticizer is halogen-free.

8. The PU-system according to claim 6 or 7, characterized in that the phosphorus containing plasticizer is diphenyl cresyl phosphate.

9. The PU-system according to anyone of claims 1 to 8 comprising
A) 10 to 60% by weight of at least one hydrated mineral having a water-content of less than 0.1% by weight in the presence of at least one water-absorbent compound,
B) 10 to 50% by weight of at least one phosphorus containing plasticizer,
C) 10 to 40% by weight of at least one binder on isocyanate basis.

10. The PU-system according to anyone of claims 1 to 9 comprising
A) 35 to 45% by weight of at least one hydrated mineral with a water-content of less than 0.1% by weight in the presence of at least one water-absorbent compound and/or its reaction product with water,
B) 20 to 30% by weight of at least one phosphorus containing plasticizer,
C) 20 to 30% by weight of at least one binder on isocyanate basis.

11. The PU-system according to anyone of claims 1 to 10, characterized in that it additionally contains up to 10% by weight of at least 1 latent curing agent, whereby the reactive groups of the curing agent are present in an amount of 10 to 100% referred to the isocyanate groups of the prepolymer.

12. The PU-system according to claim 11, characterized in that it contains the at least one latent curing agent in amounts of 1 to 3% by weight.

13. The PU-system according to claim 11 or 12, characterized in that the reactive groups of the curing agent are present in an amount of 40 to 90% referred to the isocyanate groups of the prepolymer.

14. The PU-system according to anyone of claims 11 to 13, characterized in that the reactive groups of the curing agent are present in an amount of 50 to 80% referred to the isocyanate groups of the prepolymer.

15. The PU-system according to anyone of claims 1 to 14, characterized in that the binder on isocyanate basis has an isocyanate content of 0.01 to 10% by weight referred to the total weight of the PU-system.

16. The PU-system according to claim 15, characterized in that the binder on isocyanate basis has an isocyanate content of less than 1% by weight referred to the total weight of the PU-system.

17. The PU-system according to anyone of claims 1 to 16, characterized in that the ratio of the phosphorus containing plasticizer to binder is close to 1.

18. Method for the production of a one-component PU-system comprising a hydrated mineral, characterized in that the hydrated mineral prior to its addition to the binder is pre-dried at elevated temperatures, optionally under vacuum, to a water-content below 0.1% by weight and then added under water-free conditions either together with a water-absorbent compound containing at least one water reactive group or after the water-absorbent compound to a binder or a binder containing mixture, respectively, whereby the water-absorbent compound is defined as in one of claims 1 to 3.

19. Method according to claim 18, characterized in that the hydrated mineral prior to its addition to the binder is pre-dried at elevated temperature and under vacuum to a water-content below 0.1% by weight.

## Revendications

1. Système de polyuréthane (PU) à une composante, ledit système contenant un minéral hydraté ayant une teneur en eau inférieure à 0,1 % en poids en présence d'au moins un composé qui se combine avec l'eau, contenant au moins un radical réactif face à l'eau et/ou ses produits réactionnels avec l'eau, dont le composé qui se combine avec l'eau et/ou ses produits réactionnels sont présents en une quantité maximale, qui, par rapport aux radicaux étant réactifs face à l'eau, correspondent au 0,1 % par poids maximal d'eau qui sont dans le minéral, et dont le composé qui se combine avec l'eau est sélectionné du groupe renfermant :
des monomères avec des groupes d'isocyanures ou d'isocyanures polyfonctionels, d'anhydrides, de silanes et de titanates.

2. Le système de PU suivant la revendication 1, caractérisé en ce que le composé qui se combine avec l'eau est un monocyanure.

3. Le système de PU suivant la revendication 1 ou 2, caractérisé en ce que le composé qui se combine avec l'eau est l'isocyanure para-toluènesulfonique (PTSI).

4. Le système de PU suivant l'une quelconque des revendications 1 à 3, caractérisé en ce qu'il contient de plus un composé phosphorique.

5. Le système de PU suivant l'une quelconque des revendications 1 à 4, caractérisé en ce que le composé qui se combine avec l'eau est le minéral hydraté qui est l'aluminium trihydroxy hydrate (ATH).

6. Le système de PU suivant la revendication 4 ou 5, caractérisé en ce que le composé phosphorique est un plastifiant phosphorique.

7. Le système de PU suivant la revendication 6, caractérisé en ce que le plastifiant phosphorique ne contient pas d'halogénure.

8. Le système de PU suivant la revendication 6 ou 7, caractérisé en ce que le plastifiant phosphorique est le phosphate de diphénylcrésyle.

9. Le système de PU suivant l'une quelconque des revendications 1 à 8, renfermant
A) 10 à 60 % en poids d'au moins un minéral hydraté avec une teneur d'eau inférieure à 0,1 % en poids, en présence d'au moins un composé qui se combine avec l'eau et/ou ses produits réactionnels avec l'eau,
B) 10 à 50 % en poids d'un plastifiant phosphorique,
C) 10 à 40 % en poids d'au moins un liant basé sur des isocyanures.

10. Le système de PU suivant l'une quelconque des revendications 1 à 9, renfermant
A) 35 à 45 % en poids d'au moins un minéral hydraté avec une teneur d'eau inférieure à 0,1 % en poids, en présence d'au moins un composé qui se combine avec l'eau et/ou ses produits réactionnels avec l'eau,
B) 20 à 30 % en poids d'un plastifiant phosphorique,
C) 20 à 30 % en poids d'au moins un liant basé sur des isocyanures.

11. Le système de PU suivant l'une quelconque des revendications 1 à 9, caractérisé en ce qu'il contient de plus jusqu'à 10 % en poids d'au moins un agent de durcissement latent, alors que les groupes réactifs de l'agent de durcissement s'y trouvent en une quantité de 10 à 100 % par rapport aux radicaux d'isocyanure du prépolymère.

12. Le système de PU suivant la revendication 11, caractérisé en ce qu'il contient l'agent de durcissement latent en une quantité de 1 à 3 % en poids.

13. Le système de PU suivant la revendication 11 ou 12, caractérisé en ce que les groupes réactifs de l'agent de durcissement s'y trouvent en une quantité de 40 à 90 % en poids par rapport au radicaux d'isocyanure du prépolymère.

14. Le système de PU suivant l'une quelconque des revendications 11 à 13, caractérisé en ce que les groupes réactifs de l'agent de durcissement s'y trouvent en une quantité de 50 à 80 % en poids par rapport au radicaux d'isocyanure du prépolymère.

15. Le système de PU suivant l'une quelconque des revendications 1 à 14, caractérisé en ce que le liant basé sur des isocyanures s'y trouve en une teneur d'isocyanure de 0,01 à 10 % en poids par rapport au poids total du système de PU.

16. Le système de PU suivant la revendication 15, caractérisé en ce que le liant basé sur des isocyanures s'y trouve avec une teneur d'isocyanure d'inférieure à 1 % en poids par rapport au poids total du système de PU.

17. Le système de PU suivant l'une quelconque des revendications 1 à 14, caractérisé en ce que le rapport entre le plastifiant phosphorique et le liant est proche de 1.

18. Procédé pour la fabrication d'un système de polyuréthane (PU) en une composante contenant un minéral hydraté, caractérisé en ce que le minéral contenant l'eau est pré-séché à des températures élevées et, au besoin, sous vide pour fournir ainsi une teneur d'eau inférieure de 0,1 % en poids, avant être rajouté au liant et ensuite, sous des conditions anhydres, il est rajouté, soit avec un composé liant l'eau contenant au moins un groupe qui est réactif face à l'eau, soit il est rajouté au liant après le composé liant l'eau ou un mélange contenant un liant, dont le composé liant l'eau est défini suivant dans les revendications 1 à 3.

19. Procédé suivant la revendication 18, caractérisé en ce que le minéral contenant l'eau, avant d'être rajouté au liant, est pré-séché à une température élevée et sous vide pour fournir une teneur d'eau endessous de 0,1 % en poids.
